(19) Europäisches Patentamt
European Patent Office
Office européen des brevets

(11) **EP 3 904 904 B1**

(12) **FASCICULE DE BREVET EUROPEEN**

(45) Date de publication et mention de la délivrance du brevet:
**07.06.2023 Bulletin 2023/23**

(21) Numéro de dépôt: **21170060.4**

(22) Date de dépôt: **23.04.2021**

(51) Classification Internationale des Brevets (IPC):
**G01S 13/00** (2006.01)     **G01S 13/933** (2020.01)
**G01S 7/02** (2006.01)

(52) Classification Coopérative des Brevets (CPC):
**G01S 13/003; G01S 7/024; G01S 13/933**

(54) **SURVEILLANCE DE L ESPACE À L AIDE D'UN RADAR BISTATIQUE DONT LE SYSTÈME RÉCEPTEUR EST AU MOINS PARTIELLEMENT EMBARQUÉ DANS UN SATELLITE**

WELTRAUMÜBERWACHUNG MIT EINEM BISTATISCHEN RADAR, DESSEN EMPFANGSSYSTEM SICH ZUMINDEST TEILWEISE AN BORD EINES SATELLITEN BEFINDET

MONITORING OF SPACE BY MEANS OF A BISTATIC RADAR IN WHICH THE RECEIVER SYSTEM IS AT LEAST PARTIALLY ON BOARD A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2020 FR 2004157**

(43) Date de publication de la demande:
**03.11.2021 Bulletin 2021/44**

(73) Titulaire: **Airbus Defence and Space SAS**
**31402 Toulouse Cedex 4 (FR)**

(72) Inventeurs:
- **JEANNIN, Nicolas**
  **31402 TOULOUSE Cedex 04 (FR)**
- **VOULOUZAN, Frédéric**
  **31402 TOULOUSE Cedex 04 (FR)**

(74) Mandataire: **Ipside**
**6, Impasse Michel Labrousse**
**31100 Toulouse (FR)**

(56) Documents cités:
**FR-A1- 2 769 991    US-B1- 7 119 732**

- **ZHOU YEJIAN ET AL: "Dynamic Estimation of Spin Spacecraft Based on Multiple-Station ISAR Images", IEEE TRANSACTIONS ON GEOSCIENCE AND REMOTE SENSING, IEEE SERVICE CENTER, PISCATAWAY, NJ, US, vol. 58, no. 4, 1 avril 2020 (2020-04-01), pages 2977-2989, XP011780042, ISSN: 0196-2892, DOI: 10.1109/TGRS.2019.2959270 [extrait le 2020-03-24]**

**EP 3 904 904 B1**

**Description**

**Domaine de l'invention**

La présente invention appartient au domaine de la surveillance de l'espace à l'aide d'un radar bistatique. L'invention concerne notamment un système récepteur d'un radar bistatique pour lequel une partie au moins du système récepteur est destinée à être embarquée dans un satellite en orbite autour de la Terre.

**Etat de la technique**

La surveillance d'objets non répertoriés dans l'espace (satellites, débris, etc.) est un sujet qui suscite de plus en plus d'intérêt. Cette problématique est particulièrement importante pour des objets situés à proximité de l'orbite géostationnaire (« Geostationary Orbit » ou GEO dans la littérature anglo-saxonne) puisque la grande distance qui les sépare de la surface de la Terre limite la résolution et la sensibilité des radars basés au sol. Cette problématique se pose cependant également pour la surveillance d'objets situés à des altitudes plus basses, par exemple pour des orbites terrestres moyennes (« Medium Earth Orbit » ou MEO) ou des orbites terrestres basses (« Low Earth Orbit » ou LEO).
Il existe actuellement différents systèmes pour la surveillance de l'espace. La surveillance de l'espace est notamment souvent assurée à partir de moyens optiques au sol avec des télescopes opérés par des agences spatiales ou des opérateurs privés. L'observation optique ne permet cependant pas d'obtenir une continuité de la surveillance (elle ne peut avoir lieu que la nuit et elle dépend des conditions atmosphériques). De plus, l'observation optique ne permet pas d'obtenir de manière simple une information sur la distance de l'objet surveillé (il convient pour cela de recourir à des méthodes de triangulation à partir de l'observation simultanée de plusieurs télescopes). En outre, les performances de détection de ces systèmes optiques dépendent des propriétés réflectives des objets surveillés.
La mesure dans le domaine micro-onde permet d'obtenir une alternative ou un complément intéressant à la mesure optique. Certains radars au sol opérant dans le domaine micro-onde permettent en effet la détection et le suivi d'objets en orbite basse. Néanmoins, les performances de ces radars sont insuffisantes pour détecter des petits objets proches de l'arc géostationnaire. De plus, ces systèmes requièrent une infrastructure particulièrement coûteuse.
Quelques radars au sol sont capables de détecter des objets de taille significative situés à proximité de l'arc géostationnaire. Néanmoins, ces radars emploient des ouvertures d'antenne de plusieurs dizaines de mètres, ce qui limite la portion de l'espace observée dans la mesure où il devient particulièrement difficile de modifier le pointage de l'antenne du radar. De plus, les puissances radiofréquences mises en jeu sont très importantes (plusieurs mégawatts) et le coût de l'infrastructure est extrêmement important. Aussi, ces radars ne permettent généralement pas de détecter des objets de petites tailles (par exemple inférieure au mètre) situés à proximité de l'arc géostationnaire.
Certains de ces radars sont des radars bistatiques. Un radar bistatique, contrairement à un radar monostatique, est un radar pour lequel l'émetteur et le récepteur ne sont pas colocalisés. Cette dissociation entre émission et réception impose des contraintes de synchronisation mais permet d'atteindre des géométries de mesure de l'objet différentes de celles offertes par un radar monostatique. Pour ces radars bistatiques, l'émetteur et le récepteur sont généralement tous les deux implantés au sol.
Le brevet US 7,119,732 B1 décrit un autre type de système radar bistatique pour détecter un objet à proximité d'un satellite en orbite autour de la Terre. Un signal RF est émis sur une liaison montante par une station passerelle située à la surface de la Terre. Ce signal génère une barrière électromagnétique autour du satellite. Le satellite comporte des moyens pour détecter l'objet à partir de l'énergie diffusée résultant de la violation de la barrière électromagnétique par la cible. Un tel système nécessite que le satellite pointe continuellement une antenne de référence vers la station passerelle pour pouvoir détecter un objet à proximité du satellite.
Il existe également des solutions basées sur des radars entièrement embarqués à bord de satellites placés en orbite autour de la Terre. Ces solutions ne s'avèrent cependant pas satisfaisantes en termes de couverture spatiale et/ou temporelle de l'observation, ou en termes de performances de détection.

**Exposé de l'invention**

La présente invention a pour objectif de remédier à tout ou partie des inconvénients de l'art antérieur, notamment ceux exposés ci-avant, en proposant une solution relativement peu coûteuse pour détecter et suivre la position d'un objet dans l'espace avec des performances satisfaisantes même lorsque l'objet est de petite taille (par exemple avec des dimensions inférieures au mètre) et situé à une grande distance de la Terre (par exemple à proximité de l'arc géostationnaire).
A cet effet, et selon un premier aspect, il est proposé par la présente invention un procédé de détection d'un objet dans l'espace à l'aide d'un radar bistatique. Le radar bistatique comporte un système émetteur situé à la surface de la Terre et un système récepteur au moins partiellement embarqué dans un satellite en orbite autour de la Terre. Le

2

procédé comporte les étapes suivantes :

- une réception, par la partie du système récepteur embarquée dans le satellite, d'un signal de recherche correspondant à un signal radiofréquences émis par le système émetteur et réfléchi par ledit objet,
- un traitement numérique, par une unité de contrôle du système récepteur, du signal de recherche reçu pour déterminer une information représentative de la distance entre l'objet et le satellite,
- une estimation, par une unité de localisation du système récepteur, de la position de l'objet à partir de l'information déterminée par l'unité de contrôle.

De façon avantageuse, le traitement numérique comporte un calcul d'une fonction d'ambiguïté entre le signal de recherche réfléchi par l'objet et un signal de référence correspondant à une réplique du signal émis par le système émetteur mémorisée par l'unité de contrôle ou générée par l'unité de contrôle à partir d'une séquence d'initialisation.

On entend par « espace » la région située au-delà d'une altitude de 100 kms par rapport à la surface de la Terre.

Par « radar bistatique », on entend un radar dont le système émetteur et le système récepteur ne sont pas colocalisés. Le radar fonctionne dans le domaine des radiofréquences, c'est-à-dire pour des signaux dont la fréquence d'onde électromagnétique varie entre 3 kHz (kilohertz) et 300 GHz (gigahertz). L'utilisation de signaux radiofréquences (couramment appelés « signaux radio ») permet de s'affranchir des contraintes liées aux conditions d'éclairement et météorologiques (ce qui n'est pas le cas pour les radars optiques). D'autre part, cela permet d'accéder relativement facilement à des informations sur la distance de l'objet à détecter.

Le système récepteur du radar bistatique comporte une chaine de réception radio, une unité de contrôle et une unité de localisation. Au moins une partie de la chaîne de réception est destinée à être embarquée à bord d'un satellite en orbite autour de la Terre. Ceci garantit une certaine proximité entre l'objet à détecter et la partie de la chaine de réception radio embarquée dans le satellite, ce qui permet d'avoir une sensibilité de détection plus importante pour cet objet. L'unité de contrôle et/ou l'unité de localisation peuvent être embarquées dans le satellite, ou bien elles peuvent être basées dans une station de réception au sol. Il peut en effet être avantageux de déporter au sol les opérations les plus contraignantes en termes de calcul afin de simplifier la conception et ainsi réduire le coût de la charge utile du satellite. L'unité de contrôle supporte principalement des fonctions de traitement de signal. L'unité de contrôle peut également supporter dans certains cas des fonctions de contrôle d'une ou plusieurs antennes du satellite.

Le système émetteur du radar bistatique est en revanche situé au sol, à la surface de la Terre. L'absence d'émission par le satellite pour détecter un objet simplifie la conception de la charge utile du satellite (cela limite les contraintes sur la dissipation thermique et sur la compatibilité électromagnétique qui apparaissent inévitablement avec l'intégration d'un instrument actif sur une plate-forme satellitaire). De plus, cette absence d'émission pour détecter un objet confère au satellite une certaine discrétion puisque cela limite les possibilités de détecter le satellite à partir de ses propres émissions radio.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, le système émetteur et le système récepteur sont configurés pour coopérer l'un avec l'autre : la partie du système récepteur embarquée dans le satellite comporte une antenne de recherche pour recevoir le signal de recherche, et le procédé comporte une étape d'orientation de l'antenne de recherche pour couvrir une zone de l'espace illuminée par le système émetteur.

On parle de radar bistatique « actif » lorsque le système émetteur et le système récepteur du radar bistatique coopèrent l'un avec l'autre. Dans un tel cas, le système récepteur a accès à des informations relatives aux signaux émis par le système émetteur via un canal de communication ad-hoc (par exemple la direction, l'instant d'émission ou la fréquence d'émission d'un signal émis par le système émetteur) ce qui peut favoriser le procédé de détection d'un objet. Une stratégie de balayage coordonnée des zones illuminées respectivement par le système émetteur et le système récepteur peut notamment être envisagée.

Dans des modes particuliers de mise en oeuvre, le satellite est en orbite géostationnaire ou proche d'une orbite géostationnaire.

On entend par « proche d'une orbite géostationnaire » que l'objet est situé à une altitude variant entre 30000 kms et 40000 kms par rapport à la surface de la Terre.

Selon un deuxième aspect, la présente invention concerne un système récepteur d'un radar bistatique pour la détection d'un objet dans l'espace. Le système récepteur comporte au moins une chaîne de réception radio, dite « voie de recherche », comprenant une antenne de recherche, un bloc de traitement analogique d'un signal radio reçu par l'antenne de recherche et un bloc de conversion du signal reçu en un signal numérique. Le système récepteur comporte également une unité de contrôle et une unité de localisation. Au moins l'antenne de recherche et le bloc de traitement analogique sont destinés à être embarqué dans un satellite en orbite autour de la Terre. La voie de recherche est configurée pour recevoir, lorsque le satellite est en orbite autour de la Terre, un signal de recherche émis par un système émetteur situé à la surface de la Terre et réfléchi par ledit objet. L'unité de contrôle est configurée pour déterminer, à partir du signal de recherche converti en un signal numérique, une information représentative de la distance entre l'objet et le satellite. L'unité de localisation est configurée pour estimer la position de l'objet à partir de l'information déterminée par l'unité de contrôle. De façon avantageuse, l'unité de contrôle est configurée pour calculer une fonction d'ambiguïté entre le signal de recherche réfléchi par l'objet et un signal de référence correspondant à une réplique du signal émis par le système émetteur mémorisée par l'unité de contrôle ou générée par l'unité de contrôle à partir d'une séquence d'initialisation.

L'antenne de recherche et le bloc de traitement analogique sont destinés à être embarqué dans un satellite en orbite autour de la Terre. On entend par là que ces éléments sont adaptés (ou compatibles) pour être embarqué dans un satellite en orbite autour de la Terre. Cela signifie notamment que l'antenne de recherche présente des dimensions suffisamment faibles pour pouvoir être embarquée dans un satellite, par exemple des dimensions inférieures à trois mètres, voire inférieures au mètre.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, l'antenne de recherche est une antenne directive repointable. L'unité de contrôle est configurée pour diriger l'antenne de recherche et pour déterminer une direction d'arrivée d'un signal de recherche reçu par l'antenne de recherche.

On entend par « antenne directive » une antenne qui présente dans son diagramme de rayonnement un lobe principal nettement plus important que les autres lobes. L'antenne est d'autant plus directive que le lobe principal présente une largeur d'ouverture faible entre les angles d'atténuation à 3 dB. Par exemple, l'antenne directive présente une largeur d'ouverture de deux degrés. On entend par « antenne repointable » que l'antenne possède des moyens pour être pointée dans différentes directions. Ces moyens de pointage peuvent être mécaniques ou électroniques.

Dans des modes particuliers de réalisation, l'information déterminée par l'unité de contrôle comporte l'un au moins des éléments suivants :

- un décalage temporel entre le signal de recherche et le signal de référence,
- un décalage fréquentiel entre le signal de recherche et le signal de référence,
- une différence de niveau de puissance reçue entre le signal de recherche et le signal de référence,
- une différence de polarisation entre le signal de recherche et le signal de référence.

Dans des modes particuliers de réalisation, le système récepteur comporte plusieurs voies de recherche. Il est en effet envisageable d'utiliser un réseau d'antennes pour obtenir une capacité de pointage numérique d'antenne, permettant ainsi la réjection de signaux interférents, la localisation de source, et/ou l'amélioration du rapport signal sur bruit du signal de recherche.

Selon un troisième aspect, la présente invention concerne un radar bistatique pour la détection d'un objet dans l'espace. Le radar bistatique comporte un système émetteur situé à la surface de la Terre et un système récepteur selon l'un quelconque des modes de réalisation précédents.

Selon un quatrième aspect, la présente invention concerne un satellite destiné à être placé en orbite autour de la Terre. Le satellite comporte une chaîne de réception radio d'un système récepteur d'un radar bistatique pour la détection d'un objet dans l'espace, dite « voie de recherche ». Ladite partie de la chaîne de réception embarquée dans le satellite comprend au moins une antenne de recherche, un bloc de traitement analogique d'un signal radio reçu par l'antenne de recherche, et un bloc de conversion du signal reçu en un signal numérique. Le satellite comporte également une unité de contrôle configurée pour déterminer, à partir du signal de recherche converti en un signal numérique, une information représentative de la distance entre l'objet et le satellite. La voie de recherche est configurée pour recevoir, lorsque le satellite est en orbite, un signal de recherche émis par un système émetteur situé à la surface de la Terre et réfléchi par ledit objet. L'unité de contrôle est configurée pour calculer une fonction d'ambiguïté entre le signal de recherche réfléchi par l'objet et un signal de référence correspondant à une réplique du signal émis par le système émetteur mémorisée par l'unité de contrôle ou générée par l'unité de contrôle à partir d'une séquence d'initialisation

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, l'antenne de recherche est configurée pour être orientée vers une zone de l'espace située à l'opposé de la Terre par rapport au satellite quand le satellite est en orbite.

## Présentation des figures

L'invention sera mieux comprise à la lecture de la description suivante, donnée à titre d'exemple nullement limitatif, et faite en se référant aux figures 1 à 14 qui représentent :

[Fig. 1] une représentation schématique d'un radar bistatique selon l'invention,

[Fig. 2] une représentation schématique d'un système récepteur d'un radar bistatique selon l'invention,

[Fig. 3] une représentation schématique d'une chaîne de réception (voie de recherche) du système récepteur,

[Fig. 4] une représentation schématique d'une deuxième chaîne de réception (voie de référence) du système récepteur,

[Fig. 5] une représentation schématique d'un mode de réalisation dans lequel une partie de la chaîne de réception est embarquée dans le satellite, et une autre partie est implémentée dans une station de réception au sol,

[Fig. 6] une représentation schématique d'une unité de contrôle du système récepteur,

[Fig. 7] une représentation schématique d'un mode particulier de réalisation de l'unité de contrôle lorsque le système récepteur comporte plusieurs voies de recherche et plusieurs voies de référence,

[Fig. 8] une représentation schématique d'un mode particulier de mise en oeuvre d'une estimation de la position d'un objet par une unité de localisation du système récepteur,

[Fig. 9] une représentation schématique des principales étapes d'un procédé de détection d'un objet dans l'espace à l'aide d'un système récepteur d'un radar bistatique,

[Fig. 10] une représentation schématique d'un mode particulier de mise en oeuvre dans lequel l'antenne de recherche est orientée vers une zone de l'espace située à l'opposé de la Terre pour détecter un signal réfléchi par un objet,

[Fig. 11] une représentation schématique d'un radar bistatique passif dans lequel le système émetteur est une station terrienne de télécommunications par satellite,

[Fig. 12] une représentation schématique d'un mode particulier de mise en oeuvre dans lequel l'antenne de recherche est orientée vers la Terre pour recevoir un signal diffracté par un objet selon le principe de la diffusion vers l'avant,

[Fig. 13] une représentation schématique d'une voie de recherche et de l'unité de contrôle d'un système récepteur pour recevoir et traiter un signal diffracté par un objet selon le principe de la diffusion vers l'avant,

[Fig. 14] une représentation schématique d'un mode particulier de mise en oeuvre exploitant la diffusion vers l'avant dans lequel plusieurs systèmes émetteurs sont impliqués.

Dans ces figures, des références identiques d'une figure à une autre désignent des éléments identiques ou analogues. Pour des raisons de clarté, les éléments représentés ne sont pas nécessairement à une même échelle, sauf mention contraire.

**Description détaillée d'un mode de réalisation de l'invention**

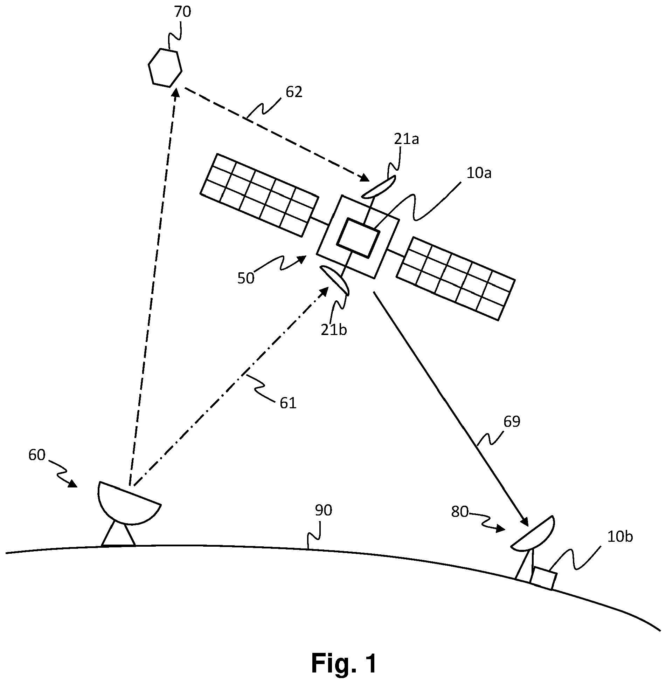

La figure 1 représente schématiquement un radar bistatique selon l'invention. Le radar bistatique est utilisé pour détecter un objet 70 dans l'espace. Le radar bistatique comporte un système émetteur 60 situé à la surface de la Terre 90, et un système récepteur dont une partie 10a au moins est embarquée dans un satellite 50 placé en orbite autour de la Terre. Une autre partie 10b du système récepteur peut éventuellement être implémenté au sol, par exemple dans une station de réception 80 située à la surface de la Terre 90. Dans une variante, la totalité du système récepteur peut être embarquée dans le satellite 50.

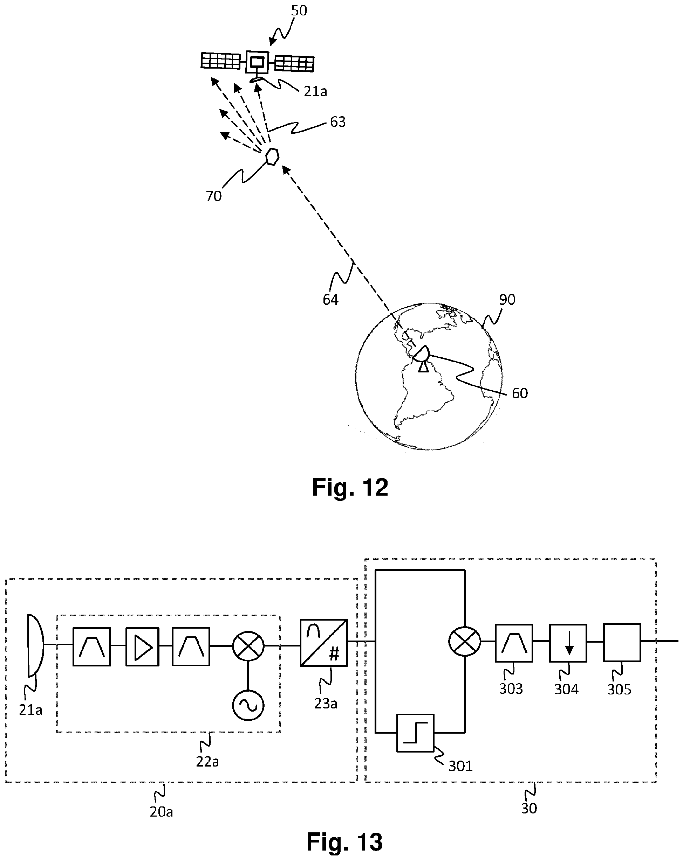

La partie 10a du système récepteur embarquée dans le satellite 50 comporte au moins une antenne de recherche 21a et un bloc de traitement analogique d'un signal radio reçu par l'antenne de recherche 21a. L'antenne de recherche 21a et le bloc de traitement analogique associé font partie d'une chaîne de réception, dite « voie de recherche » configurée pour recevoir un « signal de recherche » émis par le système émetteur 60 et réfléchi ou diffracté par l'objet 70. Dans l'exemple illustré sur la figure 1, le signal de recherche 62 est réfléchi par l'objet 70. Un exemple dans lequel le signal de recherche est diffracté par l'objet 70 sera présenté ultérieurement en référence aux figures 12 à 14.

Dans l'exemple illustré sur la figure 1, la partie 10a du système récepteur embarquée dans le satellite 50 comporte également une antenne de référence 21b qui fait partie d'une deuxième chaîne de réception, dite « voie de référence », configurée pour recevoir un signal de référence 61 émis par le système émetteur 60 et directement reçu, sans réflexion, par l'antenne de référence 21b.

Une fonction d'ambiguïté peut alors être calculée entre le signal de recherche 62 et le signal de référence 61 pour déterminer une information représentative de la distance entre l'objet 70 et le satellite 50 et de son évolution au cours du temps, ce qui permettra ensuite d'estimer une position et éventuellement une trajectoire de l'objet 70.

Il convient de noter que la voie de référence est optionnelle car il est envisageable de mémoriser une réplique du signal émis par le système émetteur 60 dans une mémoire électronique du système récepteur, et d'utiliser cette réplique en tant que signal de référence (plutôt qu'un signal reçu en temps réel) pour calculer la fonction d'ambiguïté.

Aussi, il convient de noter que l'utilisation d'un signal de référence et le calcul d'une fonction d'ambiguïté sont aussi optionnels, notamment dans le cas où le système récepteur est configuré pour recevoir un signal de recherche diffracté selon le principe de la diffusion en avant (voir ci-après en référence aux figures 12 à 14).

Le satellite 50 comporte en outre un module de communication pour établir un lien de communication 69 entre avec une station de réception 80 au sol.

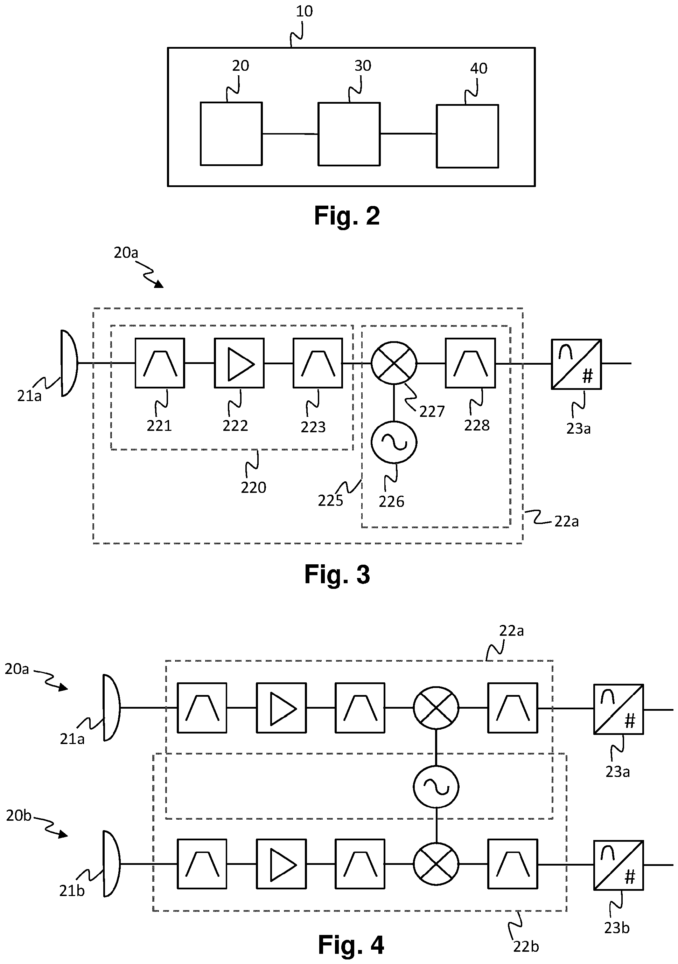

La figure 2 représente schématiquement un système récepteur 10 d'un radar bistatique selon l'invention. Le système récepteur 10 comporte au moins une chaîne de réception 20, dite « voie de recherche », une unité de contrôle 30 et une unité de localisation 40. La voie de recherche est configurée pour recevoir, traiter et numériser un signal de recherche émis par le système émetteur 60 et réfléchi ou diffracté par l'objet 70. L'unité de contrôle 30 est configurée pour déterminer, à partir du signal numérique fourni par la voie de recherche, une information représentative de la distance entre l'objet 70 et le satellite 50. L'unité de localisation 40 est configurée pour estimer la position de l'objet 70 à partir de l'information déterminée par l'unité de contrôle 30.

Tel qu'expliqué précédemment, la partie 10a du système récepteur 10 qui est embarquée dans le satellite 50 comporte au moins une partie de la voie de recherche. La partie 10a du système récepteur 10 qui est embarquée dans le satellite 50 peut également comporter la totalité de la voie de recherche. De manière optionnelle, la partie 10a du système récepteur 10 qui est embarquée dans le satellite 50 peut aussi comporter l'unité de contrôle 30, et si c'est le cas, elle peut éventuellement aussi comporter l'unité de localisation 40. Autrement dit, le lien de communication 69 entre le satellite 50 et la station de réception 80 au sol peut intervenir soit entre la partie de la voie de recherche qui est embarquée dans le satellite et la partie de la voie de recherche qui est implémentée au sol, soit entre la voie de recherche totalement embarquée dans le satellite et l'unité de contrôle 30 implémentée au sol, soit entre l'unité de contrôle 30 embarquée dans le satellite et l'unité de localisation 40 implémentée au sol, soit en sortie de l'unité de localisation 40 embarquée dans le satellite 50. La nature des informations transmises sur le lien de communication 69 entre le satellite 50 et la station de réception 80 au sol dépend de l'alternative choisie. Il peut s'agir par exemple, selon les cas, d'une simple répétition du signal analogique reçu par l'antenne de recherche 21a, d'une conversion dans un format numérique du signal analogique reçu par l'antenne de recherche 21a, d'une information déterminée par l'unité de contrôle 30, ou d'une position de l'objet 70 estimée par l'unité de localisation 40.

La figure 3 représente schématiquement une chaîne de réception 20 correspondant à une voie de recherche 20a. La voie de recherche 20a comprend, de manière conventionnelle, une antenne de recherche 21a, un bloc de traitement analogique 22a et un bloc de conversion 23a d'un signal analogique en un signal numérique.

Tel qu'illustré sur la figure 4, et tel qu'expliqué précédemment, le système récepteur 10 peut également comporter une voie de référence 20b qui comprend une antenne de référence 21b, un bloc de traitement analogique 22b et un bloc de conversion 23b analogique-numérique.

L'antenne de recherche 21a et l'antenne de référence 21b peuvent être de différentes natures. Il peut s'agir par exemple d'antennes quasi-omnidirectionnelles, d'antennes hémisphériques ou d'antennes directives. Ces antennes peuvent optionnellement posséder un système de pointage mécanique ou électronique (antennes repointables).

L'antenne de recherche 21a et l'antenne de référence 21b peuvent avantageusement présenter des polarisations circulaires orthogonales afin de prendre en compte un changement de polarisation du signal de recherche (signal réfléchi) par rapport au signal de référence (signal direct). Ceci permet de maximiser les rapports signal à bruit (SNR pour « Signal on Noise Ratio » dans la littérature anglo-saxonne) pour le signal de recherche et le signal de référence. En outre, l'utilisation d'antennes polarisées orthogonalement permet de faciliter la réjection du signal de référence dans le signal de recherche, ou inversement.

Tel qu'illustré sur les figures 3 et 4, le bloc de traitement analogique 22a, 22b de la voie de recherche 20a et de la voie de référence 20b comporte par exemple, de manière conventionnelle, un bloc 220 d'amplification et de filtrage et un bloc 224 de transposition du signal dans une bande de fréquences intermédiaire ou en bande de base pour permettre la numérisation du signal. Le bloc 220 d'amplification et de filtrage peut comporter un ou plusieurs filtres analogiques 221, 223 pour isoler fréquentiellement le signal d'intérêt, et un ou plusieurs amplificateurs 222 faible bruit. Le bloc 225 de transposition permet de transposer le signal analogique dans une bande de fréquences plus basse pour permettre la conversion du signal dans un format numérique par le bloc de conversion 23a, 23b. Le bloc 225 de transposition comporte notamment, de façon conventionnelle, un oscillateur local 226, un multiplicateur 227 et optionnellement un filtre analogique 228. Tel qu'illustré sur la figure 4, l'oscillateur local 226 peut être commun à la voie de recherche 20a et à la voie de référence 20b. Le bloc de conversion 23a, 23b peut être réalisé par un convertisseur analogique-numérique conventionnel qui exécute un échantillonnage du signal. On dispose alors en sortie de la voie de recherche 20a et, le cas échéant, de la voie de référence 20b, d'un flux d'échantillons numériques.

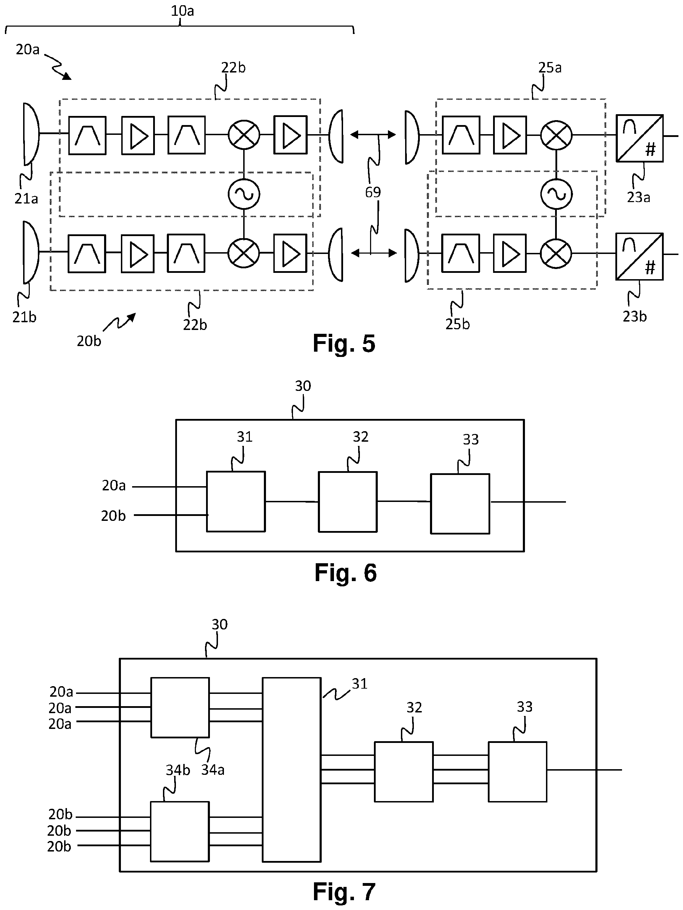

La figure 5 illustre schématiquement le cas où une partie 10a de la chaîne de réception 20 est implémentée dans le satellite 50 et une autre partie est implémentée dans la station de réception 80 au sol. Dans cet exemple, l'unité de contrôle 30 et l'unité de localisation 40 sont également implémentées au sol. Le lien de communication 69 entre le satellite 50 et la la station de réception 80 au sol intervient par exemple en sortie du bloc de traitement analogique 22a, 22b, et avant la conversion du signal au format numérique. Dans cette variante, le bloc de traitement analogique 22a, 22b de la voie de recherche 20a et de la voie de référence 20b comporte par exemple une transposition du signal analogique dans une bande de fréquences compatible avec le lien de communication 69 et une amplification avant transmission sur le lien de communication 69. La partie de la chaîne de la réception qui est implémentée au sol comporte un autre bloc de traitement analogique 25a, 25b pour traiter et transposer le signal analogique dans une bande de fréquences intermédiaire, ou en bande de base, pour la numérisation par le bloc de conversion 23a, 23b. De telles dispositions permettent de limiter au maximum l'électronique numérique embarquée dans le satellite 50 et de déporter au sol les opérations les plus contraignantes en termes de calcul. Cela induit néanmoins une dégradation du rapport signal à bruit en raison de l'amplification et des pertes de propagation (cette dégradation peut néanmoins être limitée en optimisant le lien de communication 69).

La figure 6 représente schématiquement l'unité de contrôle 30 du système récepteur 10 illustré à la figure 2. L'unité de contrôle 30 comporte par exemple un ou plusieurs processeurs et des moyens de mémorisation (disque dur magnétique, mémoire électronique, disque optique, etc.) dans lesquels est mémorisé un produit programme d'ordinateur sous la forme d'un ensemble d'instructions de code de programme à exécuter. Alternativement ou en complément, l'unité de contrôle 30 comporte un ou des circuits logiques programmables (FPGA, PLD, etc.), et/ou un ou des circuits intégrés spécialisés (ASIC), et/ou un ensemble de composants électroniques discrets, etc.

Dans l'exemple illustré à la figure 6, l'unité de contrôle 30 prend en entrée les échantillons numériques de la voie de recherche 20a et les échantillons numériques de la voie de référence 20b. Comme cela a été expliqué précédemment, la voie de référence 20b est facultative, par exemple si une réplique du signal de référence est enregistrée sous la forme d'un ensemble d'échantillons numériques dans une mémoire de l'unité de contrôle 30 ou générée par l'unité de contrôle 30 à partir d'une séquence d'initialisation.

Dans l'exemple illustré à la figure 6, l'unité de contrôle 30 comporte trois modules distincts correspondant à trois fonctionnalités différentes. Un premier module 31 prend en charge le calcul d'une fonction d'ambiguïté entre le signal de recherche et le signal de référence fournis sous forme numérique respectivement sur la voie de recherche 20a et sur la voie de référence 20b. La fonction d'ambiguïté correspond à des valeurs de corrélation entre les signaux décalés en fréquence. Le domaine du décalage fréquentiel est par exemple balayé en tenant compte du décalage fréquentiel maximal attendu entre le signal de recherche et le signal de référence en fonction notamment du décalage Doppler maximal atteignable par les objets à détecter. Le domaine temporel est également découpé en plusieurs intervalles d'une période de mesure de durée prédéterminée. Un deuxième module 33 s'occupe d'identifier des maxima locaux de la fonction d'ambiguïté suffisamment élevés par rapport au bruit thermique pour détecter avec une confiance suffisante un signal réfléchi par un objet dans le signal de la voie de recherche (il s'agit par exemple d'identifier les points dans le plan temps/fréquences pour lesquels des valeurs de corrélation supérieures à un seuil prédéterminé sont obtenues). Plusieurs maxima locaux de la fonction d'ambiguïté peuvent apparaître, notamment si un signal est réfléchi par plusieurs objets, ou si un objet réfléchit plusieurs signaux différents en même temps dans une même bande de fréquences.

En cas d'isolation imparfaite de la voie de recherche 20a, le signal de recherche (signal réfléchi) peut contenir le signal de référence (signal direct). Les pics de la fonction d'ambiguïté peuvent alors être masqués par l'autocorrélation à décalage temporel et fréquentiel nul du signal de référence. Pour limiter ces inconvénients, l'unité de contrôle 30 peut avantageusement comporter un troisième module 32 visant à supprimer le signal direct dans le signal de recherche. Une méthode possible à cette fin est d'estimer l'amplitude et la phase du signal direct et de soustraire le signal acquis sur la voie de recherche avec la bonne amplitude et le bon déphasage.

Il convient de noter que les trois modules 31, 32, 33 susmentionnés peuvent être implémentés dans une seule et même entité physique (processeur, circuit à logique programmable ou circuit électronique dédié) ou dans plusieurs entités physiques différentes.

La présence d'un signal réfléchi par un objet 70 dans le signal total capté par la voie de recherche 20a du système récepteur 10 entraînera la présence d'un maximum sur la fonction d'ambiguïté. La position dans le plan temps/fréquence du maximum de la fonction d'ambiguïté peut être liée à une information sur la distance de l'objet 70 par rapport au satellite 50. Par exemple, un décalage temporel entre le signal direct et le signal réfléchi est représentatif de la différence de longueur du chemin parcouru par le signal entre son émission et sa réception en ligne de vue directe et celle du chemin pris par le signal réfléchi par l'objet. Un décalage fréquentiel entre le signal direct et le signal réfléchi est représentatif de la vitesse d'évolution de cette différence de chemin. De plus l'antenne de recherche 21a peut permettre d'obtenir une information de localisation angulaire, par exemple dans le cas où l'antenne de recherche 21a présente une certaine directivité et une capacité de pointage.

La capacité de détection d'un objet 70 est le principal indicateur de performance du système. Cette capacité de détection peut être quantifiée par le rapport signal à bruit lors du calcul de la fonction d'ambiguïté. Ce rapport signal à bruit est très proche du rapport signal à bruit du signal de recherche si l'on suppose que le rapport signal à bruit du signal de référence est très supérieur au rapport signal à bruit du signal de recherche. Ce rapport signal à bruit dépend de la durée d'intégration du signal. Cette intégration cohérente du signal permet d'accroitre le rapport signal à bruit en accumulant dans le temps des signaux réfléchis successifs. Cette durée d'intégration ne peut cependant pas être accrue indéfiniment car cela nécessite une géométrie et une attitude de l'objet qui varient peu au cours du temps. Cela entraîne une résolution de plus en plus importante dans le domaine fréquentiel dans le calcul de la fonction d'ambiguïté, ainsi qu'un accroissement du temps requis pour balayer l'espace de recherche dans le cas d'utilisation d'une antenne à balayage. Toutefois, le temps d'intégration peut être plus important que celui habituellement utilisé par les radars terrestres, c'est-à-dire les radars pour lesquels à la fois l'émetteur et le récepteur sont situés à la surface de la Terre (quelques secondes pour le système selon l'invention contre quelques fractions de secondes pour les radars terrestres) compte tenu de la faible dynamique des objets visés.

La détection d'un objet 70 sera obtenue si un pic de la fonction d'ambiguïté surnage du bruit. Le seuil de détection sera ajusté en fonction d'un objectif de fausse alarme et de non détection. Par exemple un seuil de détection de 10 dB permet d'escompter une probabilité de fausse alarme de $10^{-4}$ et une probabilité de détection de 0,9 (sous hypothèse de bruit gaussien). La portée de détection pourra être établie pour une surface équivalente radar (SER) d'un objet 70 et un seuil de détection prédéterminés. La précision sur la mesure de distance effectuée sera de l'ordre de c/B où c est la vitesse de la lumière et B est la largeur de la bande de fréquence occupée par le signal. La vitesse de variation de cette distance sera évaluée par le biais de la mesure de fréquence Doppler.

Tel qu'illustré sur la figure 7, le système récepteur 10 peut éventuellement comporter plusieurs voies de recherche 20a et plusieurs voies de référence 20b. Cette pluralité de chaînes de réception permet d'obtenir une capacité de pointage numérique permettant la réjection de signaux interférents, la localisation de source, et/ou l'amélioration du rapport signal à bruit lors du calcul de la fonction d'ambiguïté. Les sorties de chaque voie de réception sont alors routées vers l'unité de contrôle 30. L'unité de contrôle peut comporter des réseaux numériques de formation de faisceaux 34a, 34b (« beam forming network » dans la littérature anglo-saxonne). Le réseau 34a de formation de faisceaux associé aux différentes voies de recherche 20a prend par exemple en charge le traitement d'antenne pour déterminer la position du système émetteur 60 par des algorithmes de détection de la direction d'arrivée d'un signal (dans le cas où la position du système émetteur 60 n'est pas connue a priori par le système récepteur 10), ou pour focaliser le réseau d'antennes de recherche 21a sur un système émetteur 60 particulier (dans le cas où la position du système émetteur 60 est connue a priori par le système récepteur 10), et éventuellement pour annuler des signaux interférents. Le réseau 34b de formation de faisceaux associé aux différentes voies de référence 20b prend par exemple en charge la focalisation du réseau d'antennes de référence 21b pour balayer une zone de recherche et, le cas échéant, mettre en place un traitement d'antenne pour discriminer différents objets.

L'unité de localisation 40 peut elle aussi comporter un ou plusieurs processeurs et des moyens de mémorisation (disque dur magnétique, mémoire électronique, disque optique, etc.) dans lesquels est mémorisé un produit programme d'ordinateur sous la forme d'un ensemble d'instructions de code de programme à exécuter. Alternativement ou en complément, l'unité de localisation 40 comporte un ou des circuits logiques programmables (FPGA, PLD, etc.), et/ou un ou des circuits intégrés spécialisés (ASIC), et/ou un ensemble de composants électroniques discrets, etc. Lorsque l'unité de contrôle 30 et l'unité de localisation 40 sont colocalisées, elles peuvent être implémentées dans une seule et même entité physique (processeur, circuit à logique programmable ou circuit électronique dédié) ou dans plusieurs entités physiques différentes.

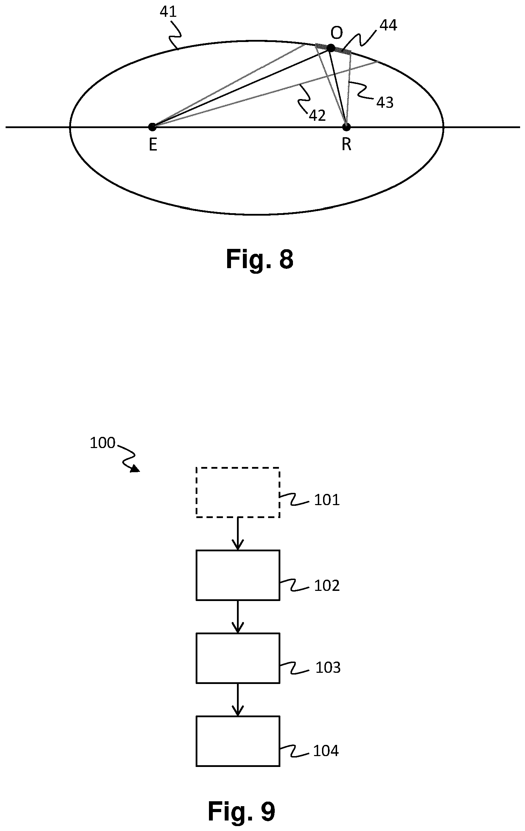

L'unité de localisation 40 est configurée pour estimer la position de l'objet 70 à partir de l'information représentative de la distance entre l'objet 70 et le satellite 50 fournie par l'unité de contrôle 30. La figure 8 illustre schématiquement un exemple de mise en oeuvre de cette estimation de la position de l'objet 70 par l'unité de localisation 70. Le point E correspond au système émetteur 60, le point R correspond au satellite 50 qui embarque au moins partiellement le système récepteur 10, le point O correspond à l'objet 70 à détecter. La détermination par l'unité de contrôle 30 d'un décalage temporel entre le signal de recherche et le signal de référence permet d'accéder à la différence entre d'une part la somme (EO + RO) de la distance entre E et O et la distance entre R et O, et d'autre part la distance entre E et R. Connaissant la distance entre E et R, il est possible de localiser O sur l'ellipsoïde 41 dont les foyers sont E et R. Si disponible, et tel qu'illustré sur la figure 8, la connaissance de la position du cône d'illumination 42 par le système émetteur 60 et/ou du cône de visibilité 43 du système récepteur 10 peut être exploitée pour limiter l'estimation de la position de l'objet 70 à un secteur angulaire 44 restreint de l'ellipsoïde 41 (dans l'exemple illustré à la figure 8 ce secteur angulaire 44 correspond à l'intersection entre le cône d'illumination 42, le cône de visibilité 43 et l'ellipsoïde 41).

Il est envisageable d'améliorer la précision de l'estimation de la position de l'objet 70 par le biais de mécanismes de filtrage (par exemple des méthodes particulaires ou de type Kalman étendu) prenant en compte la dynamique de la mécanique spatiale de l'objet 70 et, le cas échéant, des hypothèses plausibles sur le système de propulsion.

L'unité de localisation 40 peut également estimer une trajectoire suivie par l'objet 70 et comparer cette trajectoire estimée à des trajectoires listées dans un catalogue d'objets déjà répertoriés. Le catalogue pourra éventuellement être mis à jour en fonction des mesures réalisées par l'unité de localisation 40 (par exemple par l'ajout d'un objet 70 pas encore répertorié ou la correction d'une trajectoire pour un objet 70 déjà répertorié).

La figure 9 représente schématiquement les principales étapes d'un procédé 100 de détection d'un objet 70 dans l'espace à l'aide d'un système récepteur 10 d'un radar bistatique selon l'invention.

Le procédé 100 de détection comprend notamment une étape de réception 102, par la partie 10a du système récepteur embarquée dans le satellite 50, d'un signal de recherche 62 correspondant à un signal radiofréquences émis par le système émetteur 60 au sol et réfléchi ou diffracté par l'objet 70. Cette étape est mise en oeuvre par la partie de la voie de recherche 20a embarquée dans le satellite 50 en orbite autour de la Terre 90.

Le procédé 100 de détection comprend également une étape de traitement numérique 103, par l'unité de contrôle 30, du signal de recherche reçu pour déterminer une information représentative de la distance entre l'objet 70 et le satellite 50.

Le procédé 100 de détection comprend également une étape d'estimation 104, par l'unité de localisation 40, de la position de l'objet 70 à partir de l'information déterminée par l'unité de contrôle 30.

Tel qu'illustré dans la figure 9, le procédé 100 de détection comporte une étape facultative de réception 101, par la partie 10a du système récepteur embarquée dans le satellite 50, d'un signal de référence 61 directement reçu en provenance du système émetteur 70. Cette étape est mise en oeuvre par la partie de la voie de référence 20b embarquée dans le satellite 50 en orbite autour de la Terre 90.

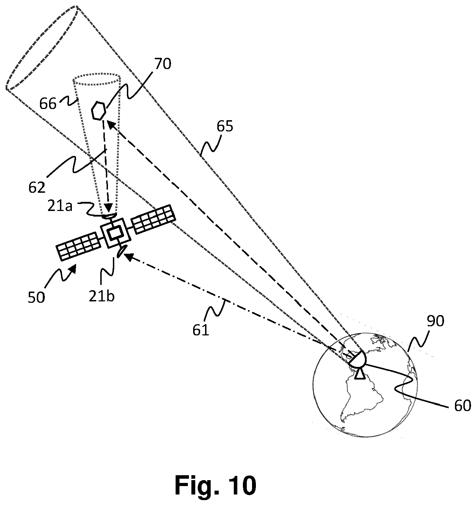

La figure 10 illustre un exemple de mise en oeuvre dans lequel la voie de recherche 20a est configurée pour recevoir un signal 62 réfléchi par l'objet 70 et l'antenne de recherche 21a est orientée vers une zone de l'espace située à l'opposé de la Terre 90 par rapport au satellite 50 lorsque le satellite 50 est en orbite. Aussi, la partie 10a du système récepteur 10 embarquée dans le satellite 50 comporte une antenne de référence 21b pour recevoir sur une voie de référence 20b un signal de référence 61 émis directement par le système émetteur 60. L'antenne de référence est configurée pour être orientée vers la Terre 90 lorsque le satellite 50 est en orbite. De telles dispositions permettent avantageusement de limiter la contamination du signal de recherche par le signal de référence. Un tel agencement des antennes permet de détecter des objets situés à une altitude supérieure à l'altitude de l'orbite sur laquelle évolue le satellite 50.

Dans des modes particuliers de mise en oeuvre, le système émetteur 60 et le système récepteur 10 sont configurés pour coopérer l'un avec l'autre. Par exemple, le système récepteur a accès à des informations relatives aux signaux émis par le système émetteur (par exemple la direction, l'instant d'émission et/ou la fréquence d'émission d'un signal émis par le système émetteur) ce qui peut favoriser le procédé 100 de détection d'un objet. Une stratégie de balayage coordonnée des zones illuminées respectivement par le système émetteur 60 et le système récepteur 10 peut notamment être envisagée. Dans un tel cas, le procédé 100 peut comporter une étape d'orientation de l'antenne de recherche 21a pour couvrir une zone de l'espace illuminée par le système émetteur 60 (balayage par un cône de visibilité 66 de l'antenne de recherche 21a d'une zone comprise à l'intérieur d'un cône d'illumination 65 du système émetteur 60 pour détecter l'objet 70).

Il convient de noter que sur la figure 10, le cône d'illumination 65 correspond sensiblement à un lobe principal du diagramme de rayonnement de l'antenne du système émetteur 60. Même si l'antenne de référence 21b ne se trouve pas dans ce cône d'illumination 65, elle peut recevoir le signal de référence 61 dans la direction d'un lobe secondaire.

Comme expliqué précédemment, la capacité de détection des objets peut être estimée à partir du rapport signal à bruit $SNR_R$ du signal de recherche reçu par la voie de recherche 20a du système récepteur 10. Ce rapport signal à bruit $SNR_R$ peut être quantifié par le biais de l'équation radar ci-dessous :

[Math. 1]

$$SNR_R = \frac{P_t\, G_t\, G_r\, T_{int}\, \lambda^2\, \sigma}{(4\pi)^3\, k_B\, T_0\, F\, L\, d_E^2\, d_R^2}$$

dans laquelle :

- $\sigma$ est la surface équivalente radar (SER),
- $P_t$ est la puissance moyenne d'émission,
- $G_t$ est le gain d'antenne à l'émission,
- $G_r$ est le gain d'antenne à la réception,
- $\lambda$ est la longueur d'onde,
- $T_0$ est la température de bruit de référence usuellement prise égale à 290K,
- $F$ est le facteur de bruit de la chaîne de réception,
- $d_E$ est la distance entre l'émetteur et l'objet,
- $d_R$ est la distance entre l'objet et le récepteur (portée de détection),
- $L$ représentes les pertes sur le canal de transmission,
- $T_{int}$ est la durée d'intégration de la mesure,
- $K_B$ est la constante de Boltzman.

Le tableau ci-dessous décrit à titre d'exemple des bilans de puissance pour un système récepteur 10 d'un radar bistatique selon l'invention au moins partiellement embarqué dans un satellite 50 en orbite géostationnaire, pour des signaux émis par un système émetteur 60 respectivement dans les bandes de fréquences L, Ku et K. Dans ces exemples, la portée de détection varie approximativement entre 70 et 130 kilomètres.

[Table 1]

| Emetteur | Bande L | Bande Ku | Bande K |
|---|---|---|---|
| Longueur d'onde $\lambda$ (cm) | 23,1 | 1,82 | 0,85 |
| Puissance d'émission $P_t$ (W) | $1.10^6$ | $2.10^4$ | $2.10^4$ |
| Gain d'antenne $G_t$ à l'émission (dBi) | 46,1 | 68,2 | 66,5 |
| Taille d'antenne (m) | 34 | 34 | 13 |
| Distance $d_E$ entre émetteur et objet (km) | $4.10^4$ | $4.10^4$ | $4.10^4$ |
| Récepteur | | | |
| Gain d'antenne $G_r$ à la réception (dBi) | 11,7 | 33,8 | 40,4 |
| Taille d'antenne (m) | 0,5 | 0,5 | 0,5 |
| Pertes L (dB) | 10 | 10 | 10 |
| Facteur de bruit F | 2 | 2 | 2 |
| SER $\sigma$ de l'objet à détecter (dBm$^2$) | -10 | -10 | -10 |
| Rapport signal à bruit $SNR_R$ de détection (dB) | 10 | 10 | 10 |
| Temps d'intégration $T_{int}$ (s) | 2 | 2 | 2 |
| Distance $d_R$ entre récepteur et objet (m) | 71,1 | 127,6 | 105,0 |

Dans des modes particuliers de mise en oeuvre, le système émetteur 60 et le système récepteur 10 sont opérés indépendamment l'un de l'autre (radar bistatique passif).

Il est envisageable par exemple d'exploiter, depuis un satellite 50 en orbite basse, des signaux émis par des émetteurs radars dédiés à l'observation d'objets en orbite basse sans que ces émetteurs radars ne soient spécialement coordonnés avec le système récepteur 10. Un tel émetteur radar créé usuellement un grand nombre de faisceaux de manière à créer une zone de surveillance continue maximisant les chances de détection régulière des objets. Cette zone de surveillance peut être réalisée au moyen de faisceaux orientés avec un même azimut et couvrant une gamme d'élévation aussi grande que possible. Un satellite 50 embarquant au moins partiellement un système récepteur 10 selon l'invention peut alors profiter de manière opportune des émissions d'un tel émetteur radar pour localiser les échos générés par des objets illuminés par le radar.

Suivant le type de l'antenne de recherche 21a embarquée dans le satellite 50, les distances de détection seront plus ou moins grandes. Il est notamment possible d'atteindre des distances de détection de plusieurs dizaines de kilomètres avec une antenne relativement peu directive. Le tableau ci-dessous décrit à titre d'exemple un bilan de puissance pour un système récepteur 10 au moins partiellement embarqué dans un satellite 50 en orbite basse, pour des signaux émis dans la bande de fréquences S par un émetteur radar au sol dédié à la surveillance d'objets en orbite basse.

[Table 2]

| Emetteur | Bande S |
|---|---|
| Longueur d'onde $\lambda$ (cm) | 10 |
| Puissance d'émission $P_t$ (W) | $5.10^3$ |
| Gain d'antenne $G_t$ à l'émission (dBi) | 49,7 |
| Taille d'antenne (m) | 12 |
| Distance $d_E$ entre émetteur et objet (km) | 600 |
| Récepteur | |
| Gain d'antenne $G_r$ à la réception (dBi) | 6 |
| Taille d'antenne (m) | 0,1 |
| Pertes L (dB) | 10 |

EP 3 904 904 B1

(suite)

| Récepteur | |
|---|---|
| Facteur de bruit F | 2,7 |
| SER $\sigma$ de l'objet à détecter (dBm$^2$) | -10 |
| Rapport signal à bruit $SNR_R$ de détection (dB) | 10,9 |
| Temps d'intégration $T_{int}$ (s) | 0,3 |
| Distance $d_R$ entre récepteur et objet (m) | 30 |

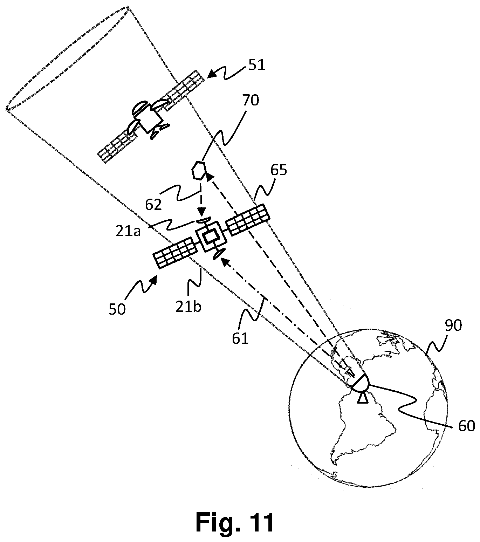

La figure 11 illustre un autre exemple de radar bistatique passif dans lequel le système émetteur 60 est une station terrienne de télécommunications par satellite. Dans l'exemple considéré et illustré à la figure 11, la station terrienne de télécommunications par satellite émet des signaux dans un cône d'illumination 65 à destination d'un satellite 51 de télécommunications situé au niveau de l'orbite géostationnaire. Le système récepteur 10 peut alors exploiter, de manière opportune, un signal de référence 61 (signal direct) et un signal de recherche 62 (signal réfléchi) émis par la station terrienne de télécommunications par satellite pour détecter un objet 70 à l'aide du procédé 100 de détection selon l'invention.

Il convient de noter que l'objectif ici n'est pas seulement de pouvoir détecter le satellite 51 de télécommunications, mais bien de pouvoir détecter tout objet 70 qui se trouve dans le cône d'illumination 65 qui a une ouverture de quelques degrés. Ceci permet de détecter des objets relativement proches du satellite 51 de télécommunications.

Il convient également de noter que plusieurs stations terriennes de télécommunications par satellite différentes peuvent être exploitées. Même si depuis l'orbite géostationnaire la diversité d'émission est relativement faible (toute la Terre est vue sous un angle de 18°), cette diversité d'émission peut être intéressante si elle permet pour l'émission d'une station terrienne particulière d'obtenir un signal réfléchi par un élément géométrique particulier de l'objet 70.

Le tableau ci-dessous décrit à titre d'exemple un bilan de puissance pour un système récepteur 10 d'un radar bistatique selon le scénario décrit ci-dessus en référence à la figure 11, pour des satellites de télécommunications opérant dans les bandes Ka, Ku et C. Il est alors possible d'obtenir des portées de détection de l'ordre de 50 kilomètres pour des objets de -10 dBm$^2$ de surface équivalente radar (SER).

[Table 3]

| Emetteur | Bande Ka | Bande Ku | Bande C |
|---|---|---|---|
| Longueur d'onde $\lambda$ (cm) | 1,0 | 2,3 | 5,0 |
| Puissance d'émission $P_t$ (W) | 240 | 2200 | 2200 |
| Gain d'antenne $G_t$ à l'émission (dBi) | 70 | 65 | 59 |
| Taille d'antenne (m) | 13,2 | 16 | 18 |
| Distance $d_E$ entre émetteur et objet (km) | $4.10^4$ | $4.10^4$ | $4.10^4$ |
| **Récepteur** | | | |
| Gain d'antenne $G_r$ à la réception (dBi) | 42,0 | 36,3 | 30,9 |
| Taille d'antenne (m) | 0,5 | 0,6 | 0,7 |
| Pertes L (dB) | 10 | 10 | 10 |
| Facteur de bruit F | 2,4 | 2,4 | 2,4 |
| SER $\sigma$ de l'objet à détecter (dBm$^2$) | -10 | -10 | -10 |
| Rapport signal à bruit $SNR_R$ de détection (dB) | 10 | 10 | 10 |
| Temps d'intégration $T_{int}$ (s) | 2 | 3 | 4 |
| Distance $d_R$ entre récepteur et objet (m) | 68,0 | 50,0 | 33,5 |

La figure 12 illustre schématiquement un mode particulier de mise en oeuvre dans lequel la voie de recherche 20a est configurée pour recevoir un signal diffracté 63 par l'objet 70 selon le principe de la « diffusion vers l'avant ». La diffusion vers l'avant est un mode de diffusion ne se produisant que lorsqu'un obstacle (cible radar) se trouve à proximité de la ligne de visée entre l'émetteur (le système émetteur 60 situé à la surface de la Terre 90) et le récepteur (partie 10a du système récepteur 10 embarquée dans le satellite 50). La projection de l'objet 70 dans un plan orthogonal à cette ligne de visée se comporte alors comme un réflecteur, re-rayonnant suivant le principe de la diffraction de Huygens. Ce re-rayonnement à partir d'une ouverture présente une directivité inversement proportionnelle à la dimension de l'objet 70 et proportionnelle à la longueur d'onde. Ce phénomène étant un phénomène de diffraction, il est indépendant des propriétés réflectives ou absorbantes de l'objet rencontré et donc insensible à d'éventuelles contremesures visant à assurer une furtivité à l'objet.

Si le re-rayonnement est orienté en direction du récepteur, il donne lieu à une augmentation significative de la surface équivalente radar (SER). La SER d'un objet 70 placé dans la direction (ligne de visée) d'un signal direct 64 émis par l'émetteur 60 est de $4\pi S^2/\lambda^2$, où S est la surface de projection de l'objet 70 obstruant la ligne de visée sur le plan orthogonal à cette ligne de visée avec une ouverture du lobe de diffusion à 3dB de ND radians, où D est la dimension l'objet 70 projeté sur le plan orthogonal à l'axe de visée. Pour une sphère de 0,1 m$^2$ de section en bande Ka, l'augmentation de SER est de 41 dB par rapport à la SER monostatique, ce qui peut faciliter considérablement la détection.

Pour ce mode particulier de mise en oeuvre utilisant le principe de diffusion vers l'avant, l'antenne de recherche 21a est avantageusement configurée pour être orientée vers la Terre 90 lorsque le satellite 50 est en orbite, afin de pouvoir détecter des objets 70 situés entre la Terre 90 et le satellite 50.

Pour ce mode particulier de mise en oeuvre, l'étape de traitement numérique 103 ne comporte pas nécessairement le calcul d'une fonction d'ambiguïté. Un mélange non linéaire tel qu'illustré sur la figure 13 permet en effet de mesurer le Doppler de l'objet 70 tout en rejetant le signal direct 64 avec plus de 80 dB de réjection. Dans l'exemple illustré sur la figure 13, la voie de recherche 20a est similaire à celle décrite en référence à la figure 3. L'unité de contrôle 30 comporte un limiteur 301 et un multiplicateur 302 pour effectuer, de façon conventionnelle, un mélange non linéaire des échantillons numériques du signal de recherche fournis par la voie de recherche 20a. En sortie du multiplicateur 302, l'unité de contrôle 30 peut en outre comporter un filtre passe-bas 303, un module 304 de sous-échantillonnage et un module 305 de suppression de signal continu.

L'unité de contrôle 30 est configurée pour calculer une signature Doppler à partir du signal de recherche 63 diffracté par l'objet 70. L'évolution du Doppler dans le temps permet de remonter à la distance entre l'objet 70 et le satellite 50, ainsi qu'à la vitesse de l'objet 70.

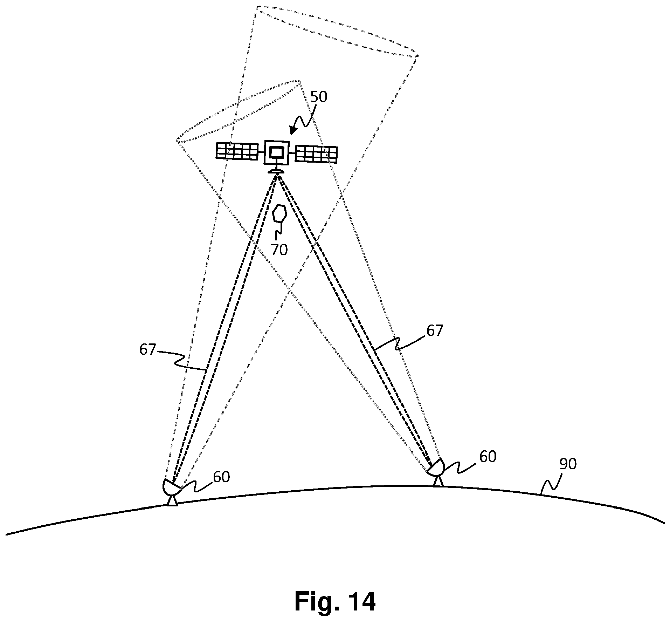

Dans un mode particulier de mise en oeuvre utilisant le principe de diffusion vers l'avant, et tel qu'illustré sur la figure 14, la partie 10a du système récepteur 10 embarquée dans le satellite 50 comporte plusieurs voies de recherche 20a, et au moins deux systèmes émetteurs 60 sont impliqués. Chaque voie de référence 20a est associée à une antenne de recherche 21a. L'ensemble des antennes de recherche 21a forment un réseau d'antennes qui permet de déterminer la direction d'arrivée d'un signal et de former des faisceaux 67 en direction de chaque système émetteur 60. Une chaîne de traitement similaire à celle décrite en référence à la figure 13 est utilisée pour chaque faisceau 67. Le système récepteur 10 a alors une capacité de détection d'un objet 70 passant dans la zone correspondant au premier ellipsoïde de Fresnel pour chaque liaison, ce qui correspond à un volume restreint de l'espace. Le déplacement du satellite 50 permet toutefois d'assurer un balayage de l'espace.

Le tableau ci-dessous décrit à titre d'exemple un bilan de puissance pour un système récepteur 10 d'un radar bistatique tirant profit du principe de diffusion vers l'avant décrit en référence aux figures 12 à 14, pour des signaux dans les bandes de fréquences Ka, Ku et C, avec des systèmes émetteurs 60 utilisant des antennes de taille variant entre trois et dix mètres, pour détecter un objet 70 de surface de projection de 30 cm x 30 cm. Il est alors possible d'obtenir des portées de détection de l'ordre de 100 kilomètres.

[Table 4]

| Emetteur | Bande Ka | Bande Ku | Bande C |
|---|---|---|---|
| Longueur d'onde $\lambda$ (cm) | 1,0 | 2,3 | 5,0 |
| Puissance d'émission $P_t$ (W) | 30 | 30 | 30 |
| Gain d'antenne $G_t$ à l'émission (dBi) | 20 | 20 | 20 |
| Taille d'antenne (m) | 3 | 6 | 10 |
| Distance $d_E$ entre émetteur et objet (km) | 4.10$^4$ | 4.10$^4$ | 4.10$^4$ |
| **Récepteur** | | | |
| Gain d'antenne $G_r$ à la réception (dBi) | 20 | 20 | 20 |
| Taille d'antenne (m) | 0,5 | 0,5 | 0,5 |
| Pertes L (dB) | 10 | 10 | 10 |

(suite)

| Récepteur | | | |
|---|---|---|---|
| Facteur de bruit F | 2,7 | 2,7 | 2,7 |
| SER $\sigma$ de l'objet à détecter (dBm$^2$) | 30,1 | 22,8 | 16,1 |
| Rapport signal à bruit SNR$_R$ de détection (dB) | 9,1 | 7,8 | 5,5 |
| Temps d'intégration T$_{int}$ (s) | 10 | 10 | 10 |
| Distance d$_R$ entre récepteur et objet (m) | 100 | 100 | 100 |

La description ci-avant illustre clairement que, par ses différentes caractéristiques et leurs avantages, la présente invention atteint les objectifs fixés. En particulier, un avantage significatif par rapport à un système de détection entièrement basé au sol est la possibilité de compenser dans le bilan de liaison radar une plus faible ouverture antennaire par une distance d'observation beaucoup plus réduite. Cela permet d'avoir une sensibilité de détection plus importante pour les objets proches du satellite dans lequel est embarqué au moins partiellement le système récepteur selon l'invention. De plus, en cas d'utilisation d'un système émetteur « d'opportunité » (radar bistatique passif), il n'est pas nécessaire de construire et d'opérer la partie émission du radar, ce qui conduit à une économie très importante.

Le tableau ci-dessous permet de comparer la sensibilité d'une solution bistatique Terre-espace selon l'invention par rapport à une solution Terre-Terre ou par rapport à une solution monostatique depuis l'espace (c'est-à-dire un radar pour lequel l'émetteur et le récepteur sont embarqués dans un même satellite).

Pour la solution bistatique Terre-Terre, on suppose utiliser le même système émetteur que dans la solution bistatique Terre-espace. La comparaison est faite sur la taille d'antenne en réception nécessaire pour détecter un signal de recherche réfléchi par un objet de même niveau de SER (-10 dbm$^2$).

Pour la solution monostatique depuis l'espace, on suppose utiliser un système antennaire de taille et de performance équivalente à celui utilisé dans le cas bistatique Terre-espace. La comparaison porte alors sur la puissance d'émission nécessaire au niveau du satellite dans la solution monostatique par rapport au cas bistatique Terre-espace, pour une même distance entre l'objet et le satellite.

[Table 5]

| Emetteur | Bistatique Terre-espace | Bistatique Terre-Terre | Monostatique espace |
|---|---|---|---|
| Longueur d'onde $\lambda$ (cm) | 1,82 | 1,82 | 1,82 |
| Puissance moyenne d'émission P$_t$ (W) | 2.10$^4$ | 2.10$^4$ | **942** |
| Gain d'antenne G$_t$ à l'émission (dBi) | 68,2 | 68,2 | 31,5 |
| Taille d'antenne (m) | 34 | 34 | 0,5 |
| Distance d$_E$ entre émetteur et objet (km) | 4.10$^4$ | 4.10$^4$ | 128 |
| Récepteur | | | |
| Gain d'antenne G$_r$ à la réception (dBi) | 33,8 | 83,7 | 33,8 |
| Taille d'antenne (m) | 0,5 | **156,7** | 0,5 |
| Pertes L (dB) | 10 | 10 | 10 |
| Facteur de bruit F | 2 | 2 | 2 |
| SER $\sigma$ de l'objet à détecter (dBm$^2$) | -10 | -10 | -10 |
| SNR de détection (dB) | 10 | 10 | 10 |
| Temps d'intégration T$_{int}$ (s) | 2 | 2 | 2 |
| Distance d$_R$ entre récepteur et objet (m) | 127,64 | 4.10$^4$ | 127,64 |

Comme indiqué dans le tableau ci-dessus, la détection d'un objet de surface équivalente radar (SER) de -10 dBm$^2$ proche de l'orbite géostationnaire requiert une antenne de taille de plus de 150 mètres pour une détection à l'aide d'un radar bistatique Terre-Terre, ce qui représente une taille d'antenne considérable et donc une complexité et un coût de conception très important pour le système récepteur.

La détection à 128 kilomètres du même objet depuis un radar monostatique depuis l'espace nécessite une puissance moyenne d'émission de près d'un kilowatt (1 kW) pour la même taille d'ouverture d'antenne de réception que pour la solution bistatique Terre-espace proposée par l'invention. Une telle puissance d'émission nécessiterait de mobiliser une fraction très importante des ressources en puissance du satellite.

déplacement du satellite 50 permet toutefois d'assurer un balayage de l'espace.

Le tableau ci-dessous décrit à titre d'exemple un bilan de puissance pour un système récepteur 10 d'un radar bistatique tirant profit du principe de diffusion vers l'avant décrit en référence aux figures 12 à 14, pour des signaux dans les bandes de fréquences Ka, Ku et C, avec des systèmes émetteurs 60 utilisant des antennes de taille variant entre trois et dix mètres, pour détecter un objet 70 de surface de projection de 30 cm × 30 cm. Il est alors possible d'obtenir des portées de détection de l'ordre de 100 kilomètres.

[Table 4]

| Emetteur | Bande Ka | Bande Ku | Bande C |
|---|---|---|---|
| Longueur d'onde $\lambda$ (cm) | 1,0 | 2,3 | 5,0 |
| Puissance d'émission $P_t$ (W) | 30 | 30 | 30 |
| Gain d'antenne $G_t$ à l'émission (dBi) | 20 | 20 | 20 |
| Taille d'antenne (m) | 3 | 6 | 10 |
| Distance $d_E$ entre émetteur et objet (km) | $4.10^4$ | $4.10^4$ | $4.10^4$ |
| **Récepteur** | | | |
| Gain d'antenne $G_r$ à la réception (dBi) | 20 | 20 | 20 |
| Taille d'antenne (m) | 0,5 | 0,5 | 0,5 |
| Pertes L (dB) | 10 | 10 | 10 |
| Facteur de bruit F | 2,7 | 2,7 | 2,7 |
| SER $\sigma$ de l'objet à détecter (dBm$^2$) | 30,1 | 22,8 | 16,1 |
| Rapport signal à bruit $SNR_R$ de détection (dB) | 9,1 | 7,8 | 5,5 |
| Temps d'intégration $T_{int}$ (s) | 10 | 10 | 10 |
| Distance $d_R$ entre récepteur et objet (m) | 100 | 100 | 100 |

La description ci-avant illustre clairement que, par ses différentes caractéristiques et leurs avantages, la présente invention atteint les objectifs fixés. En particulier, un avantage significatif par rapport à un système de détection entièrement basé au sol est la possibilité de compenser dans le bilan de liaison radar une plus faible ouverture antennaire par une distance d'observation beaucoup plus réduite. Cela permet d'avoir une sensibilité de détection plus importante pour les objets proches du satellite dans lequel est embarqué au moins partiellement le système récepteur selon l'invention. De plus, en cas d'utilisation d'un système émetteur « d'opportunité » (radar bistatique passif), il n'est pas nécessaire de construire et d'opérer la partie émission du radar, ce qui conduit à une économie très importante.

Le tableau ci-dessous permet de comparer la sensibilité d'une solution bistatique Terre-espace selon l'invention par rapport à une solution Terre-Terre ou par rapport à une solution monostatique depuis l'espace (c'est-à-dire un radar pour lequel l'émetteur et le récepteur sont embarqués dans un même satellite).

Pour la solution bistatique Terre-Terre, on suppose utiliser le même système émetteur que dans la solution bistatique Terre-espace. La comparaison est faite sur la taille d'antenne en réception nécessaire pour détecter un signal de recherche réfléchi par un objet de même niveau de SER (-10 dbm$^2$).

Pour la solution monostatique depuis l'espace, on suppose utiliser un système antennaire de taille et de performance équivalente à celui utilisé dans le cas bistatique Terre-espace. La comparaison porte alors sur la puissance d'émission nécessaire au niveau du satellite dans la solution monostatique par rapport au cas bistatique Terre-espace, pour une même distance entre l'objet et le satellite.

[Table 5]

| Emetteur | Bistatique Terre-espace | Bistatique Terre-Terre | Monostatique espace |
|---|---|---|---|
| Longueur d'onde λ (cm) | 1,82 | 1,82 | 1,82 |
| Puissance moyenne d'émission $P_t$ (W) | 2.10$^4$ | 2.10$^4$ | **942** |
| Gain d'antenne $G_t$ à l'émission (dBi) | 68,2 | 68,2 | 31,5 |
| Taille d'antenne (m) | 34 | 34 | 0,5 |
| Distance $d_E$ entre émetteur et objet (km) | 4.10$^4$ | 4.10$^4$ | 128 |
| **Récepteur** | | | |
| Gain d'antenne $G_r$ à la réception (dBi) | 33,8 | 83,7 | 33,8 |
| Taille d'antenne (m) | 0,5 | **156,7** | 0,5 |
| Pertes L (dB) | 10 | 10 | 10 |
| Facteur de bruit F | 2 | 2 | 2 |
| SER σ de l'objet à détecter (dBm$^2$) | -10 | -10 | -10 |
| SNR de détection (dB) | 10 | 10 | 10 |
| Temps d'intégration $T_{int}$ (s) | 2 | 2 | 2 |
| Distance $d_R$ entre récepteur et objet (m) | 127,64 | 4.10$^4$ | 127,64 |

Comme indiqué dans le tableau ci-dessus, la détection d'un objet de surface équivalente radar (SER) de -10 dBm$^2$ proche de l'orbite géostationnaire requiert une antenne de taille de plus de 150 mètres pour une détection à l'aide d'un radar bistatique Terre-Terre, ce qui représente une taille d'antenne considérable et donc une complexité et un coût de conception très important pour le système récepteur.

La détection à 128 kilomètres du même objet depuis un radar monostatique depuis l'espace nécessite une puissance moyenne d'émission de près d'un kilowatt (1 kW) pour la même taille d'ouverture d'antenne de réception que pour la solution bistatique Terre-espace proposée par l'invention. Une telle puissance d'émission nécessiterait de mobiliser une fraction très importante des ressources en puissance du satellite.

**Revendications**

**1.** Procédé (100) de détection d'un objet (70) dans l'espace à l'aide d'un radar bistatique comportant un système émetteur (60) situé à la surface de la Terre (90) et un système récepteur (10) au moins partiellement embarqué dans un satellite (50) en orbite autour de la Terre, ledit procédé comportant :

- une réception (102), par la partie (10a) du système récepteur (10) embarquée dans le satellite (50), d'un signal de recherche (62) correspondant à un signal radiofréquences émis par le système émetteur (60) et réfléchi par ledit objet (70),
- un traitement numérique (103), par une unité de contrôle (30) du système récepteur (10), du signal de recherche (62) reçu pour déterminer une information représentative de la distance entre l'objet (70) et le satellite (50),
- une estimation (104), par une unité de localisation (40) du système récepteur (10), de la position de l'objet (70) à partir de l'information déterminée par l'unité de contrôle (30),

**caractérisé en ce que** ledit traitement numérique (103) comporte un calcul d'une fonction d'ambiguïté entre le signal de recherche (62) et un signal de référence (61) correspondant à une réplique du signal émis par le système émetteur (60), ladite réplique étant mémorisée par l'unité de contrôle (30) ou générée par l'unité de contrôle (30) à partir d'une séquence d'initialisation.

**2.** Procédé (100) selon la revendication 1 dans lequel le système émetteur (60) et le système récepteur (10) sont configurés pour coopérer l'un avec l'autre, la partie (10a) du système récepteur (10) embarquée dans le satellite (50) comporte une antenne de recherche (21a) pour recevoir le signal de recherche (62), et le procédé (100) comporte une étape d'orientation de l'antenne de recherche (21a) pour couvrir une zone de l'espace illuminée par le système émetteur (60).

**3.** Procédé (100) selon l'une des revendications 1 à 2 dans lequel le satellite (50) est proche d'une orbite géostationnaire.

**4.** Système récepteur (10) d'un radar bistatique pour la détection d'un objet (70) dans l'espace, le système récepteur (10) comportant au moins une chaîne de réception radio (20), dite « voie de recherche (20a) », comprenant une antenne de recherche (21a), un bloc de traitement analogique (22a) d'un signal radio reçu par l'antenne de recherche (21a) et un bloc de conversion (23a) du signal reçu en un signal numérique, le système récepteur (10) comportant également une unité de contrôle (30) et une unité de localisation (40), dans lequel au moins l'antenne de recherche (21a) et le bloc de traitement analogique (22a) sont destinés à être embarqué dans un satellite (50) en orbite autour de la Terre (90), la voie de recherche (20a) est configurée pour recevoir un signal de recherche (62) émis par un système émetteur (60) situé à la surface de la Terre (90) et réfléchi par ledit objet (70), l'unité de contrôle (30) est configurée pour déterminer, à partir du signal de recherche converti en un signal numérique, une information représentative de la distance entre l'objet (70) et le satellite (50), et l'unité de localisation (40) est configurée pour estimer la position de l'objet (70) à partir de l'information déterminée par l'unité de contrôle (30), **caractérisé en ce que** l'unité de contrôle (30) est configurée pour calculer une fonction d'ambiguïté entre le signal de recherche (62) et un signal de référence (61) correspondant à une réplique du signal émis par le système émetteur (60), ladite réplique étant mémorisée par l'unité de contrôle (30) ou générée par l'unité de contrôle (30) à partir d'une séquence d'initialisation.

**5.** Système récepteur (10) selon la revendication 4 dans lequel l'antenne de recherche (21a) est une antenne directive repointable et l'unité de contrôle (30) est configurée pour diriger l'antenne de recherche (21a) et déterminer une direction d'arrivée d'un signal de recherche (62) reçu par l'antenne de recherche (21a).

**6.** Système récepteur (10) selon l'une des revendications 4 à 5 dans lequel l'information déterminée par l'unité de contrôle (30) comporte l'un au moins des éléments suivants :

- un décalage temporel entre le signal de recherche et le signal de référence,
- un décalage fréquentiel entre le signal de recherche et le signal de référence,
- une différence de niveau de puissance reçue entre entre le signal de recherche et le signal de référence,
- une différence de polarisation entre le signal de recherche et le signal de référence.

**7.** Système récepteur (10) selon l'une des revendications 4 à 6 comportant plusieurs voies de recherche (20a).

**8.** Radar bistatique pour la détection d'un objet (70) dans l'espace, comportant un système émetteur (60) situé à la surface de la Terre (90) et un système récepteur (10) selon l'une quelconque des revendications 4 à 7.

**9.** Satellite (50) comportant une chaîne de réception radio (20) d'un système récepteur (10) d'un radar bistatique pour la détection d'un objet (70) dans l'espace, dite « voie de recherche (20a) », comprenant au moins une antenne de recherche (21a), un bloc de traitement analogique (22a) d'un signal radio reçu par l'antenne de recherche (21a), et un bloc de conversion (23a) du signal reçu en un signal numérique, le satellite (50) comportant également une unité de contrôle (30) configurée pour déterminer, à partir du signal de recherche converti en un signal numérique, une information représentative de la distance entre l'objet (70) et le satellite (50), la voie de recherche (20a) étant configurée pour recevoir un signal de recherche (62) émis par un système émetteur (60) situé à la surface de la Terre (90) et réfléchi par ledit objet (70), le satellite (50) étant **caractérisé en ce que** l'unité de contrôle (30) est configurée pour calculer une fonction d'ambiguïté entre le signal de recherche (62) et un signal de référence (61) correspondant à une réplique du signal émis par le système émetteur (60), ladite réplique étant mémorisée par l'unité de contrôle (30) ou générée par l'unité de contrôle (30) à partir d'une séquence d'initialisation.

**10.** Satellite (50) selon la revendication 9 dans lequel l'antenne de recherche (20a) est configurée pour être orientée vers une zone de l'espace située à l'opposé de la Terre (90) par rapport au satellite (50) quand le satellite (50) est en orbite.

**Patentansprüche**

1. Verfahren (100) zum Erfassen eines Objekts (70) im Weltraum unter Verwendung eines bistatischen Radars, ein Sendersystem (60) beinhaltend, das sich auf der Erdoberfläche (90) befindet, und ein Empfängersystem (10), das mindestens teilweise in einem Satelliten (50) eingebettet ist, der auf der Erdumlaufbahn ist, wobei das Verfahren beinhaltet:

   - einen Empfang (102), durch den Teil (10a) des Empfängersystems (10), der im Satelliten (50) eingebettet ist, eines Suchsignals (62), das einem reflektierten Signal entspricht, das vom Sendersystem (60) gesendet und vom Objekt (70) reflektiert wurde,
   - eine digitale Verarbeitung (103), durch eine Steuereinheit (30) des Empfängersystems (10), des empfangenen Suchsignals (62), um eine Information zu ermitteln, die repräsentativ ist für die Entfernung zwischen dem Objekt (70) und dem Satelliten (50),
   - eine Schätzung (104), durch eine Ortungseinheit (40) des Empfängersystems (10), der Position des Objekts (70), ausgehend von der Information, die von der Steuereinheit (30) ermittelt wurde,

   **dadurch gekennzeichnet, dass** die digitale Verarbeitung (103) eine Berechnung einer Funktion der Mehrdeutigkeit zwischen dem Suchsignal (62) und einem Referenzsignal (61) beinhaltet, das einer Nachbildung des Signals entspricht, das vom Sendersystem (60) gesendet wurde, wobei die Nachbildung von der Steuereinheit (30) gespeichert oder von der Steuereinheit (30) erzeugt wird, ausgehend von einer Initialisierungssequenz.

2. Verfahren (100) nach Anspruch 1, wobei das Sendersystem (60) und das Empfängersystem (10) konfiguriert sind, um miteinander zusammenarbeiten, wobei der Teil (10a) des Empfängersystems (10), der im Satelliten (50) eingebettet ist, eine Suchantenne (21a) zum Empfangen des Suchsignals (62) beinhaltet, und das Verfahren (100) einen Orientierungsschritt der Suchantenne (21a) zum Abdecken eines Bereichs des Weltraums beinhaltet, der vom Sendersystem (60) beleuchtet wird.

3. Verfahren (100) nach einem der Ansprüche 1 bis 2, wobei der Satellit (50) in der Nähe einer geostationären Umlaufbahn ist.

4. Empfängersystem (10) eines bistatischen Radars zur Erfassung eines Objekts (70) im Weltraum, wobei das Empfängersystem (10) mindestens eine Funkempfangskette (20), "Suchkanal (20a)" genannt, beinhaltet, eine Suchantenne (21a) umfassend, einen analogen Block der Verarbeitung (22a) eines Funksignals, das von der Suchantenne (21a) empfangen wurde, und einen Block der Umwandlung (23a) des empfangenen Signals in ein digitales Signal, wobei das Empfängersystem (10) auch eine Steuereinheit (30) und eine Ortungseinheit (40) beinhaltet, wobei mindestens die Suchantenne (21a) und der analoge Block der Verarbeitung (22a) ausersehen sind, in einem Satelliten (50) eingebettet zu werden, der auf der Erdumlaufbahn (90) ist, wobei der Suchkanal (20a) konfiguriert ist, um ein Suchsignal (62) zu empfangen, das von einem Sendersystem (60) gesendet wird, das sich auf der Erdoberfläche (90) befindet, und vom Objekt (70) reflektiert wird, die Steuereinheit (30) konfiguriert ist, um, ausgehend vom Suchsignal, das in ein digitales Signal umgewandelt wurde, eine Information zu ermitteln, die repräsentativ ist für die Entfernung zwischen dem Objekt (70) und dem Satelliten (50), und die Ortungseinheit (40) konfiguriert ist, um die Position des Objekts (70) zu schätzen, ausgehend von der Information, die von der Steuereinheit (30) ermittelt wurde, **dadurch gekennzeichnet, dass** die Steuereinheit (30) konfiguriert ist, um eine Funktion der Mehrdeutigkeit zwischen dem Suchsignal (62) und einem Referenzsignal (61) zu berechnen, das einer Nachbildung des Signal entspricht, das vom Sendersystem (60) gesendet wurde, wobei die Nachbildung von der Steuereinheit (30) gespeichert oder von der Steuereinheit (30) erzeugt wird, ausgehend von einer Initialisierungssequenz.

5. Empfängersystem (10) nach Anspruch 4, wobei die Suchantenne (21a) eine wiedereinstellbare Richtantenne ist und die Steuereinheit (30) konfiguriert ist, um die Suchantenne (21a) auszurichten und eine Ankunftsrichtung eines Suchsignals (62) zu ermitteln, das von der Suchantenne (21a) empfangen wurde.

6. Empfängersystem (10) nach einem der Ansprüche 4 bis 5, wobei die Information, die von der Steuereinheit (30) ermittelt wurde, mindestens eines der folgenden Elemente beinhaltet:

   - eine Zeitverschiebung zwischen dem Suchsignal und dem Referenzsignal,
   - eine Frequenzverschiebung zwischen dem Suchsignal und dem Referenzsignal,
   - eine Differenz des empfangenen Leistungspegels zwischen dem Suchsignal und dem Referenzsignal,
   - eine Differenz der Polarisation zwischen dem Suchsignal und dem Referenzsignal.

7. Empfängersystem (10) nach einem der Ansprüche 4 bis 6, mehrere Suchkanäle (20a) beinhaltend.

8. Bistatisches Radar zur Erfassung eines Objekts (70) im Weltraum, das ein Sendersystem (60) beinhaltet, das sich auf der Erdoberfläche (90) befindet, und ein Empfängersystem (10), nach einem der Ansprüche 4 bis 7.

9. Satellit (50), eine Funkempfangskette (20) eines Empfängersystems (10) eines bistatischen Radars beinhaltend, zur Erfassung eines Objekts (70) im Weltraum, "Suchkanal (20a)" genannt, mindestens eine Suchantenne (21a) umfassend, einen analogen Block der Verarbeitung (22a) eines Funksignals, das von der Suchantenne (21a) empfangen wurde, und einen Block der Umwandlung (23a) des empfangenen Signals in ein digitales Signal, wobei der Satellit (50) auch eine Steuereinheit (30) beinhaltet, die konfiguriert ist, um, ausgehend vom Suchsignal, das in ein digitales Signal umgewandelt wurde, eine Information zu ermitteln, die repräsentativ ist für die Entfernung zwischen dem Objekt (70) und dem Satelliten (50), wobei der Suchkanal (20a) konfiguriert ist, um ein Suchsignal (62) zu empfangen, das vom Sendersystems (60) gesendet wurde, das sich auf der Erdoberfläche (90) befindet, und durch das Objekt (70) reflektiert wird, wobei der Satellit (50) **dadurch gekennzeichnet ist, dass** die Steuereinheit (30) konfiguriert ist, um eine Funktion der Mehrdeutigkeit zwischen dem Suchsignal (62) und einem Referenzsignal (61) zu berechnen, das einer Nachbildung des Signals entspricht, das vom Sendersystems (60) gesendet wurde, wobei die Nachbildung von der Steuereinheit (30) gespeichert oder von der Steuereinheit (30) erzeugt wird, ausgehend von einer Initialisierungssequenz.

10. Satellit (50) nach Anspruch 9, wobei die Suchantenne (20a) konfiguriert ist, um auf einen Bereich des Weltraums ausgerichtet zu sein, der sich gegenüber der Erde (90) in Bezug auf den Satelliten (50) befindet, wenn der Satellit (50) auf der Umlaufbahn ist.

**Claims**

1. A method (100) for detecting an object (70) in space using a bistatic radar including an emitter system (60) located on the surface of the Earth (90) and a receiver system (10) at least partially on board a satellite (50) in orbit around the Earth, said method including:

    - receiving (102), by the part (10a) of the receiver system (10) on board the satellite (50), a search signal (62) corresponding to a radiofrequency signal emitted by the emitter system (60) and reflected by said object (70),
    - digitally processing (103), by a control unit (30) of the receiver system (10), the received search signal (62) to determine information representative of the distance between the object (70) and the satellite (50),
    - estimating (104), by a location unit (40) of the receiver system (10), the position of the object (70) from the information determined by the control unit (30),

    **characterised in that** said digital processing (103) includes a calculation of an ambiguity function between the search signal (62) and a reference signal (61) corresponding to a replica of the signal emitted by the emitter system (60), said replica being stored by the control unit (30) or generated by the control unit (30) from an initialisation sequence.

2. The method (100) according to claim 1 wherein the emitter system (60) and the receiver system (10) are configured to cooperate with each other, the part (10a) of the receiver system (10) on board the satellite (50) includes a search antenna (21a) for receiving the search signal (62), and the method (100) includes a step of orienting the search antenna (21a) to cover an area of the space illuminated by the emitter system (60).

3. The method (100) according to one of claims 1 to 2 wherein the satellite (50) is close to a geostationary orbit.

4. A receiver system (10) of a bistatic radar for the detection of an object (70) in space, the receiver system (10) including at least one radio reception chain (20), called "search path (20a)", comprising a search antenna (21a), an analogue block (22a) for processing a radio signal received by the search antenna (21a) and a block (23a) for converting the received signal into a digital signal, the receiver system (10) also including a control unit (30) and a location unit (40), wherein at least the search antenna (21a) and the analogue processing block (22a) are intended to be on board a satellite (50) in orbit around the Earth (90), the search path (20a) is configured to receive a search signal (62) emitted by an emitter system (60) located on the surface of the Earth (90) and reflected by said object (70), the control unit (30) is configured to determine, from the search signal converted into a digital signal, information representative of the distance between the object (70) and the satellite (50), and the location unit (40) is configured to estimate the position of the object (70) from the information determined by the control unit (30), **characterised in that** the control unit (30) is configured to calculate an ambiguity function between the search signal (62) and a reference signal (61) corresponding to a replica of the signal emitted by the emitter system (60), said replica being stored by the control unit (30) or generated by the control unit (30) from an initialisation sequence.

5. The receiver system (10) according to claim 4 wherein the search antenna (21a) is a repointable directional antenna and the control unit (30) is configured to direct the search antenna (21a) and determine a direction of arrival of a search signal (62) received by the search antenna (21a).

6. The receiver system (10) according to one of claims 4 to 5 wherein the information determined by the control unit (30) includes at least one of the following elements:

   - a time lag between the search signal and the reference signal,
   - a frequency offset between the search signal and the reference signal,
   - a difference in received power level between the search signal and the reference signal,
   - a difference in polarisation between the search signal and the reference signal.

7. The receiver system (10) according to one of claims 4 to 6 including several search paths (20a).

8. A bistatic radar for the detection of an object (70) in space, including an emitter system (60) located on the surface of the Earth (90) and a receiver system (10) according to any one of claims 4 to 7.

9. A satellite (50) including a radio reception chain (20) of a receiver system (10) of a bistatic radar for the detection of an object (70) in space, called "search path (20a)", comprising at least one search antenna (21a), an analogue block (22a) for processing a radio signal received by the search antenna (21a), and a block (23a) for converting the received signal into a digital signal, the satellite (50) also including a control unit (30) configured to determine, from the search signal converted into a digital signal, information representative of the distance between the object (70) and the satellite (50), the search path (20a) being configured to receive a search signal (62) emitted by an emitter system (60) located on the surface of the Earth (90) and reflected by said object (70), the satellite (50) being **characterised in that** the control unit (30) is configured to calculate an ambiguity function between the search signal (62) and a reference signal (61) corresponding to a replica of the signal emitted by the emitter system (60), said replica being stored by the control unit (30) or generated by the control unit (30) from an initialisation sequence.

10. The satellite (50) according to claim 9 wherein the search antenna (20a) is configured to be oriented towards an area of space located opposite the Earth (90) with respect to the satellite (50) when the satellite (50) is in orbit.

**Fig. 1**

10

20    30    40

**Fig. 2**

20a

21a    221    222    223    227    228    23a

220    225    226    22a

**Fig. 3**

22a

20a

21a    23a

20b    21b    22b    23b

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7119732 B1